# EUROPEAN PATENT APPLICATION

(11) **EP 2 945 239 A1**
(43) Date of publication of application: **18.11.2015**
(21) Application number: 15167642.6
(22) Date of filing: 13.05.2015
(51) Int. Cl.: H02H 3/10, G01D 4/00, H02H 9/04, H02H 9/00

(54) **SYSTEMS AND METHODS TO PROTECT AN ENERGY UTILITY METER FROM OVERVOLTAGE EVENTS**

(30) Priority: 16.05.2014 US 201414279445
(71) Applicant: General Electric Company, Schenectady, NY 12345 (US)
(72) Inventor: OPPENHEIMER, Carl Philip, Somersworth, NH New Hampshire 03878-3108 (US); CRITTENDEN, Curtis Whitmore, Somersworth, NH New Hampshire 03878-3108 (US)
(74) Representative: Cleary, Fidelma

(57) **Abstract**

A device (30) may include a sensor (40). The sensor (40) may detect usage of electric power. Additionally, the device may include a fusible surge resistor (38) coupled in series with the sensor (40), and a thermal metal oxide varistor (MOV) (42) coupled in parallel with the sensor (40).

## Description

### BACKGROUND

The subject matter disclosed herein relates generally to utility meters, and more specifically to systems and methods for protecting energy utility meters during overvoltage events.

Energy infrastructure, such as a smart grid infrastructure, may include a variety of systems and components with sensors and memory devices to detect and store data related to energy usage. In the smart grid example, systems may include power generation systems, power transmission systems, smart meters, digital communications systems, control systems, and their related components. Certain utility meters may include various components, which are sensitive to high voltage and/or high current conditions, to detect and store energy usage data. It may be useful to improve the systems and methods to protect the sensitive components within the utility meters from overvoltage events.

### BRIEF DESCRIPTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a device may include a sensor. The sensor may detect usage of electric power. Additionally, the device may include a fusible surge resistor coupled in series with the sensor, and a thermal metal oxide varistor (MOV) coupled in parallel with the sensor.

In a second embodiment, a method may include coupling a fusible surge resistor having a resistance rating and an energy rating to a thermal MOV having a voltage rating. The resistor rating, the energy rating, and the voltage rating may be determined based on one or more protection parameters for the fusible surge resistor and the thermal MOV. The method may also include coupling the fusible surge resistor and the thermal MOV to an electric meter circuit. In this manner, the fusible surge resistor and thermal MOV may protect components of the electric meter circuit during an overvoltage event.

In a third embodiment, a system may include an energy utility meter. Additionally, the energy utility meter may include a sensor configured to detect usage of electric power from a multi-phase electric source. Further, the energy utility meter may also include one or more overvoltage event protection systems coupled to the sensor for each phase of the multi-phase electric source. Additionally, the one or more overvoltage protection systems may include a fusible surge resistor and a thermal MOV.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of an energy generation, transmission, and distribution infrastructure system, in accordance with an embodiment;
FIG. 2 is a schematic diagram of circuitry that may be part of an overvoltage event protection system in a metering system at the energy generation, transmission, and distribution infrastructure system of FIG. 1, in accordance with an embodiment; and
FIG. 3 is a flowchart illustrating an embodiment of a process for determining component ratings in order to protect components of the metering system of the energy generation, transmission, and distribution infrastructure system of FIG. 1, in accordance with an embodiment.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Present embodiments relate to an energy utility meter that may include an overvoltage event protection system. The energy utility meter may include components that may be sensitive to high voltages and/or currents. For example, the energy utility meter may incorporate a switching element with a breakdown voltage substantially lower than transient surge voltages to which the energy utility meter may be exposed. The transient surge voltages may, in some circumstances, exceed 6000V. A transient overvoltage event that may damage the components of the energy utility meter may be caused by a lightning strike or any other short duration energy surge. Further, in some situations, an extended fault on a utility power grid may create an extended overvoltage event that may also damage the components of the energy utility meter. As such, the overvoltage event protection system may provide protection to the components of the utility meter that may be sensitive to the transient overvoltage and extended overvoltage events. The overvoltage event protection system may include a fusible surge resistor and a thermal metal oxide varistor (MOV). The fusible surge resistor and the thermal MOV may work in tandem to provide an extra level of protection as compared to using just the fusible surge resistor or just the thermal MOV. Additionally, the combination of the fusible surge resistor and the thermal MOV may enable the overvoltage event protection system to function in a benign manner. In one embodiment, the fusible surge resistor may be coupled in series with the components of the utility meter, and the thermal MOV may be coupled in parallel with the components of the utility meter. In another embodiment, each phase of a multi-phase power source may feed into a separate overvoltage protection system coupled to the components of the utility meter.

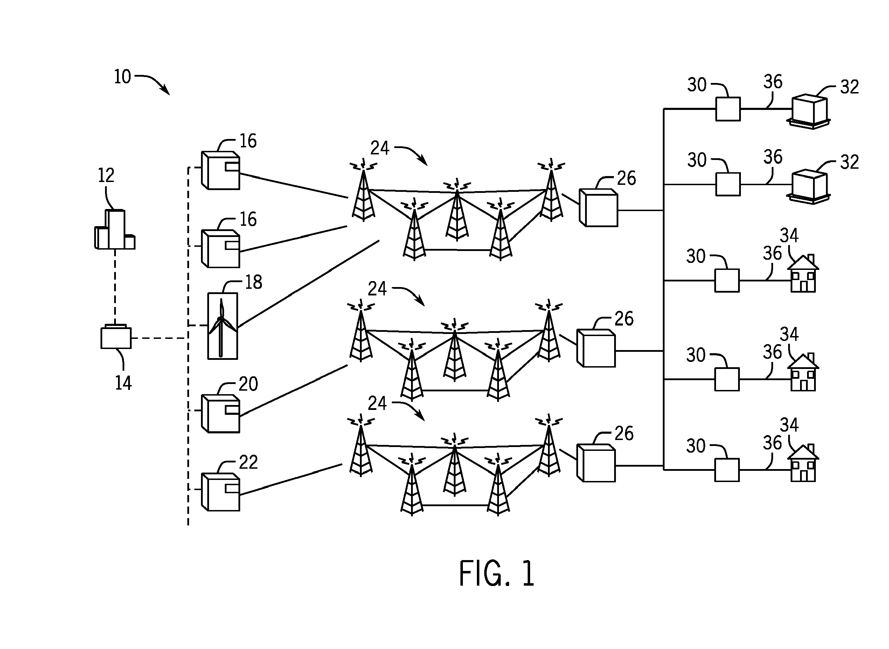

With the foregoing in mind, it may be useful to describe an embodiment of an infrastructure, such as an example smart grid system 10 illustrated in FIG. 1. It is to be noted that the systems and methods described herein may apply to a variety of infrastructures, including, but not limited to, a power transmission and distribution infrastructure. As depicted, the smart grid system 10 may include one or more utilities 12. The utility 12 may provide for oversight operations of the smart grid system 10. For example, the utilities 12 may include utility control centers 14 that may monitor and direct power produced by one or more power generation stations 16 and alternative power generation stations 18. The power generation stations 16 may include conventional power generation stations, such as power generation stations using gas, coal, biomass, and other carbonaceous products for fuel. The alternative power generation stations 18 may include power generation stations using solar power, wind power, hydroelectric power, geothermal power, and other alternative sources of power (e.g., renewable energy) to produce electricity. Other infrastructure components may include a water power producing plant 20 and a geothermal power producing plant 22. For example, the water power producing plants 20 may provide for hydroelectric power generation, and the geothermal power producing plants 22 may provide for geothermal power generation.

The power generated by the power generation stations 16, 18, 20, and 22 may be transmitted through a power transmission grid 24. The power transmission grid 24 may cover a broad geographic region or regions, such as one or more municipalities, states, or countries. The transmission grid 24 may also be a single-phase alternating current (AC) system or a two-phase AC system, but most generally may be a three-phase AC current system. As depicted, the power transmission grid 24 may include a series of towers to support a series of overhead electrical conductors in various configurations. For example, extreme high voltage (EHV) conductors may be arranged in a three conductor bundle, having a conductor for each of three phases. The power transmission grid 24 may support nominal system voltages in the ranges of 110 kilovolts (kV) to 765 kilovolts (kV). In the depicted embodiment, the power transmission grid 24 may be electrically coupled to a power distribution substation and grid 26. The power distribution substation and grid 26 may include transformers to transform the voltage of the incoming power from a transmission voltage (e.g., 765 kV, 500kV, 345kV, or 138kV) to primary (e.g., 13.8kV or 4160V) and secondary (e.g., 480V, 240V, or 120V) distribution voltages. For example, industrial electric power consumers (e.g., production plants) may use a primary distribution voltage of 13.8kV, while power delivered to commercial and residential consumers may be in the secondary distribution voltage range of 120V to 480V.

As again depicted in FIG. 1, the power transmission grid 24 and the power distribution substation and grid 26 may be part of the smart grid system 10. Accordingly, the power transmission grid 24 and the power distribution substation 26 may include various digital and automated technologies to control power electronic equipment such as generators, switches, circuit breakers, reclosers, and so forth. The power transmission grid 24 and the power distribution substation and grid 26 may also include various communications, monitoring, and recording devices such as, for example, programmable logic controllers (PLCs) and electric fault sensing protective relays. For example, in the case of the electric fault sensing protective relays during storms, a protective relay on the grid 26 may detect an electrical fault downstream of the substation and operate a circuit breaker to allow the fault to clear and restore electric power. In certain embodiments, the power transmission grid 24 and the power distribution substation and grid 26 may also deliver power and communicate data such as changes in electric load demand to a metering system 30.

In certain embodiments, the metering system 30 may be an advanced metering infrastructure (AMI) meter that may collect, measure, and analyze electric power usage and/or generation data. The metering system 30 may be electrically and communicatively coupled to one or more of the components of the smart grid 10, including the power transmission grids 24, the power distribution substation and grid 26, the commercial sites 32, and the residences 34 via source-side and load-side live and neutral conductors 36. Additionally, the metering system 30 may enable two-way communication between the commercial sites 32, the residences 34, and the utility control center 14, thereby providing a link between consumer behavior and the electric power usage and/or generation data. For example, the metering system 30 may track and account for pre-paid electricity in a similar fashion to pre-paid cell phone usage. Likewise, the utility's consumers (e.g., commercial sites 32, residences 34) may benefit from lower utility charges by optimizing their utility use to take advantage of lower rates during low demand hours. Washer/dryers, electric car chargers, and other flexible power consumption appliances may be programmed to operate during low demand hours, resulting in lower utility bills and a more balanced utilization of energy. As noted above, electric power may also be generated by the consumers (e.g., commercial sites 32, residences 34). For example, the consumers may interconnect a distributed generation (DG) resource (e.g., solar panels or wind turbines) to generate and deliver power to the smart grid 10.

As will be further appreciated, in certain embodiments, the metering system 30 may include a system of electrical and electronic components such as, for example, a display, one or more processors, memory and similar storage devices, sensors, tampering detectors, and the like. It should also be appreciated that the metering system 30 may measure, calculate, store, and display an apparent power (kVA), real power (i.e., the total power consumed by the resistive component of a given load 32, 34 over a time interval) (kW), and reactive power (i.e., the power consumed by the reactive component of a given load 32, 34 over a time interval) (kVar) as a product of power and time. For example, electric utilities may report to consumers their usage and/or generation per kilowatt-hour (kWh) for billing and/or crediting purposes. Such components of the metering system 30 may be sensitive to overvoltage events that may occur in the power transmission grid 24. As such, systems and methods to protect the electrical and electric components of the metering systems 30 may be helpful to limit replacement costs upon the occurrence of an overvoltage event.

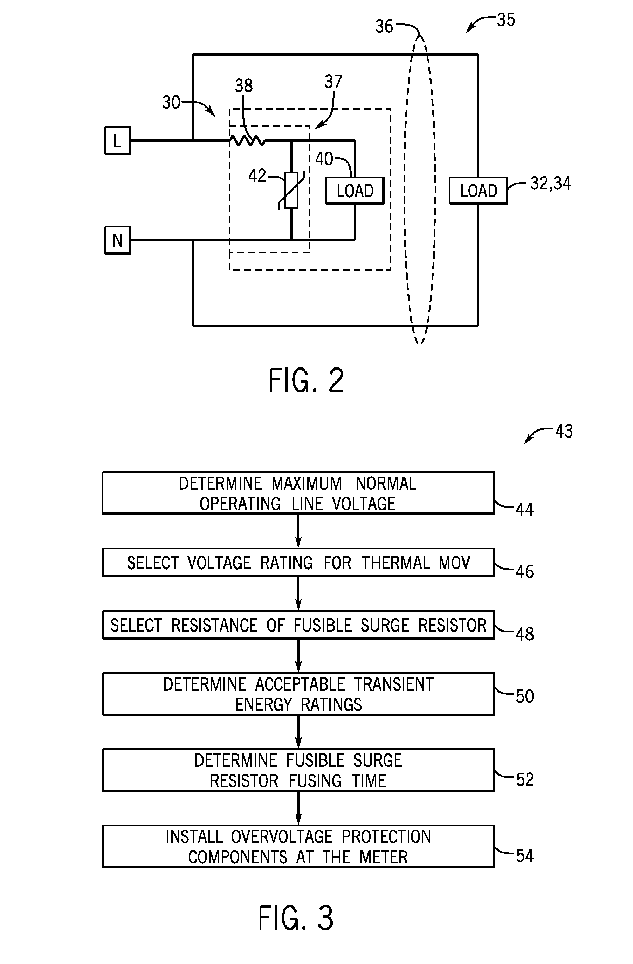

FIG. 2 is a schematic diagram 35 of the overvoltage event protection system 37 within the metering system 30. The metering system 30 may be fed by a live-line L, and the metering system 30 may also be coupled to a neutral-line N. Additionally, a commercial site 32 or a residence 34 may be coupled to the metering system 30 via the load-side live and neutral conductors 36. Further, within the metering system 30, the overvoltage event protection system 37 may include a fusible surge resistor 38 that may be coupled in series with a load 40, which may include the electrical and electric components of the metering system 30. Furthermore, the overvoltage event protection system 37 may also include a thermal metal oxide varistor (MOV) 42 that may be coupled across the load 40 and between the live-line L and the neutral-line N. While FIG. 2 illustrates the use of the thermal MOV 42, it may be noted that a standard MOV may also be used in place of the thermal MOV 42 throughout the discussion below. Generally, the thermal MOV 42 may be used in place of the standard MOV when conducting energy for a sustained amount of time during an extended overvoltage event is desired. During such an extended overvoltage event, the standard MOV may generally fuse in an unpredictable manner. The thermal MOV 42, on the other hand, may predictably fuse to form an open circuit upon experiencing the extended overvoltage event.

The thermal MOV 42 may operate as an open circuit during normal operation at a voltage level below a voltage rating for the thermal MOV 42. Additionally, when the voltage at the thermal MOV 42 exceeds the voltage rating (i.e., a clamping voltage), the thermal MOV 42 may function as a nonlinear resistance path across the load 40 in a manner that may protect the load from the overvoltage event. Further, during an extended overvoltage event, excessive current resulting from the overvoltage event may cause a fusible link within the thermal MOV 42 to open after a fuse time is reached for a specific overcurrent condition. As such, the thermal MOV 42 may have a predictable reaction to the extended overvoltage event. It may be noted that while FIG. 2 represents the overvoltage event protection system 37 in a single-phase configuration, the metering system 30 may be coupled to a multi-phase power source. In a situation where the metering system 30 is measuring the power usage of a multi-phase source, a different overvoltage protection system may be used for each of the phases that are measured. That is, each phase of the multi-phase power source may have a separate fusible surge resistor 38 and thermal MOV 42 combination protecting the metering system 30.

The fusible surge resistor 38 may limit inrush current as it flows toward the load 40 and the thermal MOV 42. A resistance of the fusible surge resistor 38 may be chosen based on an expected voltage drop across the fusible surge resistor 38 from a line voltage that allows the voltage at the thermal MOV 42 to remain at a standard voltage level. In some embodiments, the standard voltage level may be any level of voltage at the thermal MOV 42 that is below a voltage rating of the thermal MOV 42 and supplied at the metering system 30. Further, the resistance may be chosen to achieve the expected voltage drop while maintaining a current at a level below a maximum current rating of the thermal MOV 42. Upon experiencing excess power conditions, the fusible surge resistor 38 may enter a safe protection mode causing the fusible surge resistor 38 to fuse and create an open circuit at the fusible surge resistor 38 thereby preventing excessive current from damaging the load 40. The fusible surge resistor 38 may include a fusible metal film resistor, a fusible wire-wound resistor, or any other type of resistor that is fusible while experiencing high currents.

In addition to the fusible surge resistor 38 providing protection to the electric and electrical components of the load 40, the thermal MOV 42 may also provide overvoltage protection to the components of the load 40. The thermal MOV 42 may function as a voltage controlled switch. For example, at a voltage below a voltage rating of the thermal MOV 42, the thermal MOV 42 may act as an open switch. When the thermal MOV 42 acts as an open switch, all of the current entering the metering system 30 may flow toward the load 40. When the voltage across the thermal MOV 42 exceeds the voltage rating of the thermal MOV 42, the thermal MOV 42 may act as a closed, low-resistance switch. In such a situation, most of the current may pass through the thermal MOV 42 instead of the loads 40 and 32 or 34. As the thermal MOV 42 experiences excessive current for an extended period, a fusible link within the thermal MOV 42 may open resulting in the thermal MOV 42 functioning as an open circuit. The excessive current may include any current greater than a maximum current rating of the thermal MOV 42. Additionally, the thermal MOV 42 may degrade to a point where the fusible link may open at a rate that increases as the current conducted through the thermal MOV 42 also increases. For instance, the fusible link within the thermal MOV 42 may fuse faster as the current that the thermal MOV 42 may conduct continues to increase beyond the current rating of the thermal MOV 42.

Because the thermal MOV 42 may open when the thermal MOV 42 experiences currents above the current rating of the thermal MOV 42, the fusible surge resistor 38 may protect the thermal MOV 42 from opening while experiencing heightened currents. Further, the fusible surge resistor 38 may be designed to fuse prior to the fusible link within the thermal MOV 42 to better protect the components of the metering system 30. When the fusible link within the thermal MOV 42 fuses in a system without the fusible surge resistor 38, the overvoltage event may send high voltages and/or currents into the load 40 of the metering system 30, thereby causing damage to the components of the load 40. With the fusible surge resistor 38 that fuses prior to the thermal MOV 42 fusing during an extended overvoltage event, the fusible surge resistor 38 may create an open circuit on the live-line L prior to the thermal MOV 42 creating an open circuit. As such, the fusible surge resistor 38 may prevent a breakdown of the thermal MOV 42 from affecting the components of the load 40 because an open circuit may be created at the fusible surge resistor 38 during the extended overvoltage event.

FIG. 3 illustrates a method 43 for designing the overvoltage event protection system 37. At block 44, as illustrated in FIG. 3, a maximum normal operating line voltage provided to the metering system 30 may be determined. The line voltage may be the voltage level that is delivered directly to the consumer via the power distribution substation and grid 26 at the metering system 30. The line voltage may be a line-to-line voltage in a two, three, or multi-phase power system, or it may be a line-to-neutral voltage in a single, two, three, or multi-phase power system. By way of example, a 120V AC power system may supply power to a consumer in a single, two, or three-phase power system. In a single-phase power system, the 120V AC line-to-neutral voltage is approximately 120V. In a two-phase power system, with the phases offset by 180 degrees, the line-to-neutral voltage may remain approximately 120V, but the line-to-line voltage may be twice the line-to-neutral voltage, or approximately 240V, because of the 180 degree phase offset. Additionally, in a three-phase system, the phases may be offset by 120 degrees. Therefore, the line-to-neutral voltage may remain approximately 120V, but the line-to-line voltage may become approximately 120V multiplied by the square root of 3 to give a line-to-line voltage of approximately 208V. Further, an approximation of the maximum normal operating line voltage may be calculated by adding 20% of the root mean squared (RMS) voltage of a power line to the RMS voltage. For example, if the power system has a 240Vrms operating voltage, the maximum normal operating line voltage may be around 290Vrms. As such, at block 44, the line voltage for the metering system 30 may be determined based on the voltage and number of phases of the power system providing the power.

Next, at block 46, a voltage rating for the thermal MOV 42 may be selected. The voltage rating for the thermal MOV 42 may be a voltage value at which the thermal MOV 42 transitions from an element causing an open circuit to an element acting as a low-resistance load. The resistance of the thermal MOV 42 upon activation may be negligible to such an extent that the thermal MOV 42 may act substantially as a short circuit path across the load 40. Additionally, while the thermal MOV 42 receives a voltage below the voltage rating of the thermal MOV 42, the thermal MOV 42 may act as an open circuit and couple substantially all of the voltage entering the metering system 30 to the loads 32, 34, and 40. In more concise terms, the thermal MOV 42 may act as a switch that is open when the voltage entering the metering system 30 is below the voltage rating of the thermal MOV 42 and a switch that is closed when the voltage is above the voltage rating of the thermal MOV 42. For this reason, the voltage rating for the thermal MOV 42 may be chosen to be just above the maximum normal operating line voltage that may be received by the metering system 30. However, the voltage rating may be limited to a value, such that voltage received by the metering system 30 may not cause damage the components of the load 40 prior to an overvoltage event activating the thermal MOV 42. For example, if the components of the load 40 have a breakdown voltage of 700V, the voltage rating for the thermal MOV 42 may be selected between the maximum normal operating line voltage and the 700V breakdown voltage of the components of the load 40.

Subsequently, at block 48, a resistance of the fusible surge resistor 38 may be selected. To determine the resistance of the fusible surge resistor 38, an expected voltage drop across the fusible surge resistor 38 may first be calculated for a minimum working line voltage condition (i.e., a worst case power condition for the fusible surge resistor 38). Next, a minimum working direct current (DC) voltage of the metering system 30 may be determined to maintain the components of the load 40 within the metering system 30 in an active state. The minimum working DC voltage for the metering system 30 may be the level of DC voltage that is capable of supporting the metering system 30 during a power failure condition when the power transmission grid 24 operates at the minimum line voltage condition. In addition to determining the minimum working DC voltage of the metering system 30, an average current expected to conduct across the fusible surge resistor 38 when operating at the minimum working line voltage may be approximated by dividing the minimum working DC voltage of the metering system 30 by the resistance of the load 40.

After the minimum working DC voltage for the metering system 30 and the average current provided at the minimum working line voltage are approximated, a maximum resistance value for the fusible surge resistor 38 may be calculated to determine acceptable resistance values of the fusible surge resistor 38 at block 50. This calculation may be accomplished with Ohm's law using the voltage drop from a minimum line voltage to the minimum working DC voltage for the metering system 30 as well as the average current provided at the minimum working line voltage to support a secondary current of the metering system 30. By way of example only, if the average current provided at the minimum working line voltage is 0.02A, and the voltage drop from the minimum line voltage condition to the minimum working DC voltage for the metering system is 3V, then the maximum resistance value for the fusible surge resistor 38 may be approximately 150 ohms.

After calculating the maximum resistance of the fusible surge resistor 38, a resistance of the fusible surge resistor 38 may be selected based on a desired power rating of the fusible surge resistor 38 calculated from the voltage drop from the line voltage to a voltage less than the voltage rating for the thermal MOV 42 as well as from an average current provided during the normal operating line voltage. The power rating may be calculated using a power calculation of W=V*A, where W represent power in watts, V represents the voltage drop across the fusible surge resistor 38 in volts, and A represents the average current provided at the normal operating line voltage in amperes. If the power consumed by the fusible surge resistor 38 exceeds acceptable limits established by the desired power rating, then the resistance of the fusible surge resistor 38 may be reduced from the maximum resistance value until the power consumption of the fusible surge resistor 38 reaches a desired level.

In the example above, a 100 ohm fusible surge resistor 38 may be selected to continuously dissipate power at a maximum of 3W. In one example, the line voltage may supply approximately 6W to the metering system 30 during a standard operation. When the metering system 30 operates under low line conditions (e.g., 96Vrms for a meter typically running at 120Vrms), the fusible surge resistor 38 may conduct an average current of approximately 0.125A. While conducting the average current of approximately 0.125A, the fusible surge resistor 38 may dissipate an average power of approximately 1.5W. The average power of approximately 1.5W dissipated by the fusible surge resistor 38 falls well within the 3W maximum continuous power dissipation of the fusible surge resistor 38 while still dissipating a reasonable portion of the approximately 6W supplied to the metering system 30. In another example, the line voltage may supply approximately 10W to the metering system 30 during the standard operation. If the 100 ohm fusible surge resistor 38 is used in a similar manner as above, then the fusible surge resistor 38 may dissipate power in a range that exceeds the 3W continuous dissipation maximum of the fusible surge resistor 38. In such a situation, the fusible surge resistor 38 may be substituted for another fusible surge resistor with a greater continuous dissipation maximum, or the resistance of the fusible surge resistor 38 may be reduced to reduce the power dissipation of the fusible surge resistor 38 to an acceptable range below the continuous dissipation maximum of the fusible surge resistor 38. Generally, a lower resistance of the fusible surge resistor 38 may result in a reduction in power dissipation, and a higher resistance may result in an increase in power dissipation by the fusible surge resistor 38.

Subsequently, at block 50, the acceptable transient energy ratings may be determined for both the fusible surge resistor 38 and the thermal MOV 42. Initially, the maximum operating voltage and current during a short duration surge transient (e.g., a lightning strike) for the fusible surge resistor 38 and the thermal MOV 42 may be determined. Data sheets for the fusible surge resistor 38 and the thermal MOV 42 may provide the values applicable to the selected fusible surge resistor 38 and the selected thermal MOV 42. For example, the data sheet for the fusible surge resistor 38 may disclose that the maximum voltage that the fusible surge resistor 38 may endure is approximately 6kV, and the maximum current may be approximately 3kA. Further, the data sheet may indicate the amount of time that the fusible surge resistor 38 is capable of withstanding the transient voltage and current levels. Additionally, a verification that the thermal MOV 42 will remain operating in a clamping voltage range during the maximum voltage of the fusible surge resistor 38 (e.g., 6 kV) of the short duration surge transient may ensure that the overvoltage event protection system 37 functions in a desired manner.

After determining the maximum operating voltage and current of the fusible surge resistor 38 and the thermal MOV 42 during the short duration transient, the acceptable transient energy rating for the fusible surge resistor 38 may be determined using the current, the voltage drop, and a transient duration experienced during the short duration surge transient. For example, the equations J=W*s and W=VI may be used to determine the acceptable energy rating, where J represents energy in joules, W represents power in Watts, s represents time in seconds, V represents the voltage drop across the fusible surge resistor 38 in volts, and I represents current in amperes. Further, the acceptable transient energy rating for the thermal MOV 42 may be calculated using the same equations with V representing the voltage drop across the thermal MOV 42 in volts.

Next, at block 52, after determining an expected magnitude of an extended over-voltage event in which the metering system 30 may remain operating (e.g., two times the typical distribution voltage), the fusible surge resistor 38 voltage drop during the extended over-voltage event may be determined. The voltage drop of the fusible surge resistor 38 may be calculated by subtracting the thermal MOV 42 voltage rating from the expected magnitude of the extended over-voltage event. Using this value, the current flowing through the fusible surge resistor 38 may also be calculated via Ohm's law, and the current value may be compared to a time-current curve for the fusible surge resistor 38. The time-current curve for the fusible surge resistor 38 may enable a determination of a fuse time of the fusible surge resistor 38 during the extended overvoltage event. Further, the fuse time of the fusible surge resistor 38 may be calculated with the time-current curve at varying currents that the fusible surge resistor 38 may experience during the extended overvoltage event. Typically, the fuse time of the fusible surge resistor 38 may decrease as the current rises due to the increased energy received at the fusible surge resistor 38.

Additionally, it may be appreciated that an added benefit of combining the fusible surge resistor 38 with the thermal MOV 42 during the overvoltage event may be that the fusible surge resistor 38 may be selected such that the fusible surge resistor 38 may have a shorter fuse time than the thermal MOV 42 during the extended overvoltage event. When the fusible surge resistor 38 reaches an expected fuse time for a level of current flowing into the fusible surge resistor 38, the fusible surge resistor 38 may create an open circuit. Because the fusible surge resistor 38 may couple in series with the load 40 and the thermal MOV 42, the open circuit created at the fusible surge resistor 38 may prevent excessive current and voltage from coupling to the components of the load 40. As such, any sensitive components of the load 40 may be protected from the extended overvoltage event. Additionally, the fusible surge resistor 38 may be chosen such that the fusible surge resistor 38 has a shorter fuse-time than the thermal MOV 42 regardless of a current level drawn by the fusible surge resistor 38 and experienced by the thermal MOV 42. Such a choice may create an extra layer of overvoltage protection for the load 40 during an overvoltage event lasting for an extended period of time. Further, it may be noted that while commercial loads 32 and residential loads 34 are generally coupled to a fuse or circuit breaker to limit undesired effects on the loads 32, 34 during extended overvoltage events, a standard metering system generally lacks an equivalent fuse or circuit breaker system to limit undesired effects on the standard metering system during the extended overvoltage events. By using the techniques and systems presently described, the metering system 30 may provide improved protection to sensitive components of the metering system 30 during the extended overvoltage events.

After the thermal MOV 42 and the fusible surge resistor 38 are selected (blocks 46, 48, 50, and 52), the thermal MOV 42 and the fusible surge resistor 38 may be installed at block 54 within the metering system 30. In some embodiments, the thermal MOV 42 and the fusible surge resistor 38 may be positioned on a circuit board within a housing of the metering system 30. As such, the thermal MOV 42 and the fusible surge resistor 38 may be in close proximity to the circuit elements of the load 40 of the metering system 30. In other embodiments, the thermal MOV 42 and the fusible surge resistor 38 may be positioned on a circuit board in an area not within or adjacent to the housing of the metering system 30. Such a positioning of overvoltage protection elements may allow protection of the metering system 30 while not in close proximity to the metering system 30. It may be useful to note, however, that the use of the fusible surge resistor 38 and the thermal MOV 42, after selecting (blocks 46, 50, and 52) parameters of the fusible surge resistor 38 and the thermal MOV 42, may allow the metering system 30 to disconnect from the electric grid in a benign manner upon experiencing an extended overvoltage event. As such, positioning the fusible surge resistor 38 and the thermal MOV 42 at a distance from the metering system 30 may be useful in a situation involving space constraints, but it may only add a minimal amount of extra protection for the components of the metering system 30.

Following the installation (block 54) of the fusible surge resistor 38 and the thermal MOV 42 at the metering system 30, the metering system 30 may execute tasks in a protected state on the electric grid. The protected state may be achieved via the combination of the fusible surge resistor 38 and the thermal MOV 42. While the metering system 30 is in a protected state, the metering system 30 may receive an overvoltage event from the electric grid. When an overvoltage event is received, the thermal MOV 42 may act as a closed, nonlinear resistance switch. During the overvoltage event, the thermal MOV 42 may prevent a substantial portion of excess voltage from the overvoltage event from being coupled to the sensitive components of the load 40. Additionally, the fusible surge resistor 38 may substantially limit the current entering the metering system 30. Upon receiving excessive current flow via the fusible surge resistor 38, the thermal MOV 42 may open when the thermal MOV 42 experiences excessive current flow for an extended period of time. Because the thermal MOV 42 may form an open circuit during an extended overvoltage event, the fusible surge resistor 38 may be designed to have a shorter fuse time during the extended overvoltage event than the fuse time of the thermal MOV 42. By creating an open circuit at the fusible surge resistor 38 during the extended overvoltage event, the sensitive components within the load 40 may be protected in a benign manner before the thermal MOV 42 had an opportunity to open. For example, instead of the thermal MOV 42 opening resulting in all of the current created by the overvoltage event to flow through the load 40, the fusible surge resistor 38 may open first, effectively opening the circuit prior to the current reaching the load 40. In this manner, the sensitive components of the load 40 may be protected during the extended overvoltage event.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A device (30) comprising:
a sensor (40) configured to detect usage of electric power;
a fusible surge resistor (38) coupled in series to the sensor (40); and
a thermal metal oxide varistor (MOV) (42) coupled in parallel to the sensor (40).

2. The device of claim 1, wherein the fusible surge resistor (38) is configured to disconnect the sensor (30) from an electrical source during an overvoltage event.

3. The device of claim 1 or 2, wherein the sensor (30), the fusible surge resistor (38), and the thermal MOV (42) are disposed within an electrical meter housing.

4. The device of any of claims 1 to 3, wherein the sensor (30) is disposed within an electrical meter housing, and the fusible surge resistor (38) and the thermal MOV (42) are disposed outside of the electrical meter housing.

5. The device of any of claims 1 to 4, wherein the sensor (30) is configured to detect the usage of electric power associated with a multi-phase electric source.

6. The device of claim 5, wherein the fusible surge resistor (38) and the thermal MOV (42) are configured to receive a first phase of electric power associated with the multi-phase electric source.

7. The device of claim 6, comprising a second fusible surge resistor (38) and a second thermal MOV (42) configured to receive a second phase of electric power associated with the multi-phase electric source.

8. The device of any preceding claim, wherein the fusible surge resistor (38) is configured to have a shorter fuse time than a fuse time of the thermal MOV (42).

9. The device of any preceding claim, wherein a resistance of the fusible surge resistor (38) is configured to limit an inrush current during an overvoltage event.

10. A method comprising:
coupling a fusible surge resistor (38) having a resistance and a time-current curve to a thermal metal oxide varistor (MOV) (42) having a voltage rating, wherein the resistance, the time-current curve, and the voltage rating are determined based on one or more protection parameters for the fusible surge resistor (38) and the thermal MOV (42); and
coupling the fusible surge resistor (38) and the thermal MOV (42) to an electric meter circuit (30), wherein the fusible surge resistor (38) and thermal MOV (42) are configured to protect components of the electric meter circuit during an overvoltage event.

11. The method of claim 10, wherein the fusible surge resistor (38) is coupled in series to the electric meter circuit (30) at a downstream node of the fusible surge resistor (38).

12. The method of claim 11, wherein the thermal MOV (42) is coupled in parallel to the electric meter circuit (30), and the thermal MOV is coupled to the downstream node of the fusible surge resistor (38) on a first end and a downstream node of the electric meter circuit on a second end.

13. The method of claim 12, further comprising selecting the fusible surge resistor (38) and the thermal MOV (42) based on a first amount of time for the fusible surge resistor (38) to open when experiencing the overvoltage event and a second amount of time for the thermal MOV (42) to form an open circuit during an extended overvoltage event.

14. The method of claim 13, wherein the first amount of time is less than the second amount of time.

15. A system comprising:
an energy utility meter (30), comprising the device of any of claims 1 to 9.
